Europäisches Patentamt

(19) European Patent Office

Office européen des brevets

(11) Numéro de publication: **0 136 581**
**B1**

(12) **FASCICULE DE BREVET EUROPEEN**

(45) Date de publication du fascicule du brevet:
**11.03.87**

(51) Int. Cl.⁴: **B 21 D 51/18, E 04 H 7/06**

(21) Numéro de dépôt: **84110556.2**

(22) Date de dépôt: **05.09.84**

(54) **Procédé et installation pour la fabrication de gros appareils cylindriques métalliques.**

(30) Priorité: **06.09.83 FR 8314227**

(43) Date de publication de la demande:
**10.04.85 Bulletin 85/15**

(45) Mention de la délivrance du brevet:
**11.03.87 Bulletin 87/11**

(84) Etats contractants désignés:
**AT BE CH DE GB IT LI LU NL SE**

(56) Documents cités:
**BE - A - 838 202**
**DE - A - 1 937 579**
**DE - A - 2 704 845**
**FR - A - 2 489 799**
**GB - A - 2 068 799**
**NL - A - 7 601 404**

(73) Titulaire: **CONSTRUCTIONS SOUDEES DU COTEAU**
**Société anonyme, 4 Boulevard des Etines, F-42120 Le**
**Coteau (FR)**

(72) Inventeur: **Cabany, Pierre, 141, Rue du Maréchal Foch,**
**F-42300 Riorges-Roanne (FR)**
Inventeur: **Gardette, André, 18, Rue du Dr. Charcot,**
**F-42120 Le Coteau (FR)**
Inventeur: **Jacquet, Xavier, Les Plaines Sud. Perreux,**
**F-42120 le Coteau (FR)**
Inventeur: **Tollis, Aurelio, Bourg Commelle-Vernay,**
**F-42120 Le Coteau (FR)**
Inventeur: **Tollis, Fernando, Bourg Commelle-Vernay,**
**F-42120 Le Coteau (FR)**

(74) Mandataire: **Casalonga, Alain et al, BUREAU D.A.**
**CASALONGA OFFICE JOSSE & PETIT Morassistrasse 8,**
**D-8000 München 5 (DE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit
être formée par écrit et motivée. Elle n'est réputée formée qu'après paiement de la taxe d'opposition (Art. 99(1) Convention sur le
brevet européen).

## Description

L'invention est relative à un procédé et une installation pour la fabrication d'une enveloppe métallique cylindrique de grandes dimensions selon le préambule des revendications 1 et 3.

Un tel procédé et une telle installation sont connus de l'art antérieur par le document DE-A-2704845.

L'invention concerne la fabrication des gros appareils cylindriques métalliques tels qu'en utilisent les industries chimiques, pharmaceutiques ou alimentaires et dont les dimensions rendent le transport malaisé ou impossible.

Ces appareils sont essentiellement des capacités constituées d'un toit, d'un fond et d'un virole, et les dimensions en diamètre et en hauteur dépassent souvent 8 à 10 mètres, c'est-à-dire des valeurs très au-delà du gabarit routier. Pour cette raison ces appareils sont construits en éléments séparés assemblés sur place par soudure.

Habituellement le montage des éléments constitutifs de la capacité est effectué de la manière suivante: les toits et les fonds sont préfabriqués en usine en éléments transportables et soudés sur place. La partie cylindrique est constituée soit de tôles coupées au format, précintrées et soudées les unes aux autres dans le sens vertical et dans le sens horizontal pour obtenir la virole de dimension désirée, soit de bandes de tole préparées en usine, enroulées sur elles-mêmes et correspondant à tronçon de virole.

Ces procédés de fabrication des viroles cylindriques présentent de nombreux inconvénients. En particulier le soudage tôle par tôle conduit à un temps de montage élevé pour accoster les tôles les unes aux autres, et un grand nombre de soudures sur chantier. Le soudage de bandes de grande longeur supprime une partie des soudures sur chantier, mais conduit à des difficultés de manutention et de mise en forme nuisant à la géométrie de l'ouvrage monté. En effet la manutention assez malaisée des diverses viroles enroulées conduit à des heurts et des défauts, et le déroulement de ces viroles amène classiquement le métal à céder de manière alternative ce qui conduit à des formes de viroles irrégulièrement polygonales, qui sont non seulement d'un mauvais aspect, mais rendent extrêmement difficile l'accostage et le soudage des viroles superposées.

Le but de l'invention est d'éliminer les inconvénients précédents en éliminant la plupart des manutentions, en améliorant la géométrie des éléments et en réduisant considérablement la main d'oeuvre utilisée.

Le procédé selon l'invention consiste à partir directement d'une bande métallique en bobine telle que livrée par les aciéries, à assurer en continu son déroulement, son croquage ou cassage de nerf, son alimentation et éventuellement son polissage, son coupage en longueur exacte correspondant au développement d'une virole, puis son enroulement en continu sur un manège tournant jusqu'à refermer la virole, pointée manuellement, après quoi, une virole précédemment exécutée est amenée au-dessus du manège par un moyen de manutention, et les tôles sont accostées au moyen d'une paire de galets d'accostage portés par le manège en un point de sa périphérie, un intérieur et l'autre extérieur à la jonction entre les deux viroles, et une tête de soudage, située à un autre endroit de la périphérie, permet d'effectuer les soudures horizontales par rotation du manège, les deux galets d'accostage ainsi que la tête de soudage étant mobiles verticalement pour permettre d'effectuer également les soudures verticales, le manège étant alors arrêté, et les galets d'accostage étant également utilisables pour araser par écrasement les soudures horizontales et verticales.

L'invention concerne également l'installation pour la mise en oeuvre du procédé ci-dessus.

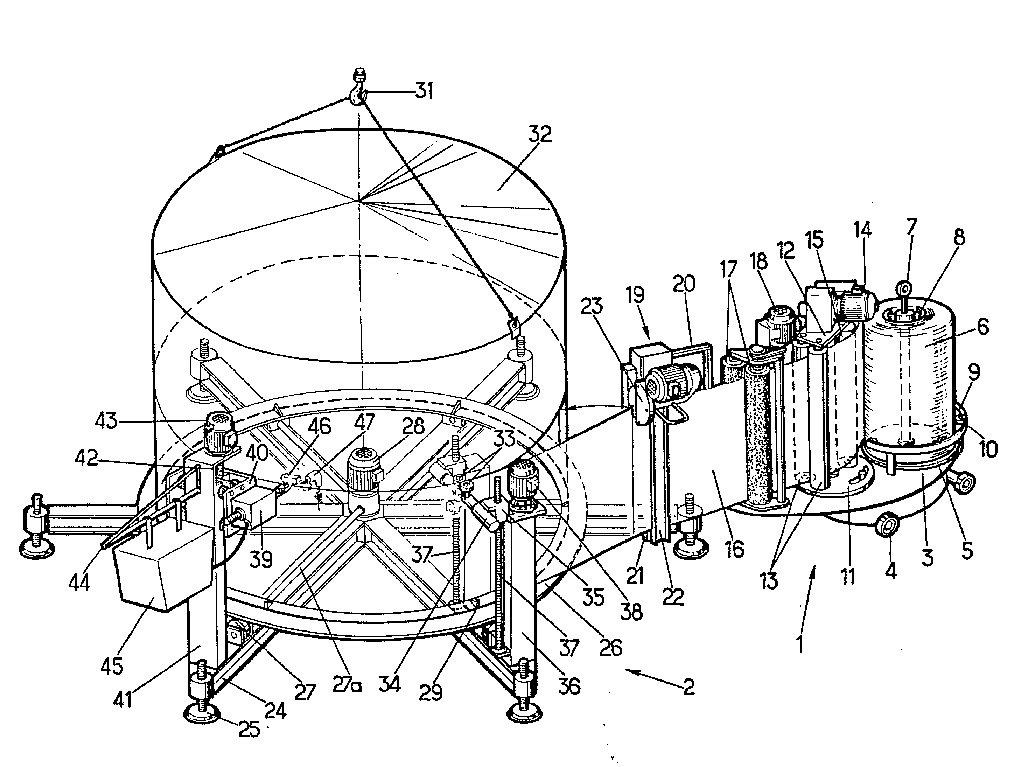

D'autres particularités de l'invention apparaîtront dans la description qui va suivre d'un mode de réalisation pris comme exemple et représenté sur la figure unique qui représente l'installation en perspective.

L'installation comporte un certain nombre de dispositifs, de préférence groupés en deux unités, dont une unité d'alimentation 1 et un manège 2.

L'unité d'alimentation 1 comporte un support 3, de préférence mobile sur roulettes 4 facilitant sa mise en place, et qui porte un plateau tournant 5, recevant la bobine 6 de métal en bande (ou «coil»), ce métal étant presque toujours constitué par de l'acier inoxydable laminé à froid glacé. Ce plateau porte-bobine 5 comporte une tige de levage 7 et un mandrin expansible 8 situé au centre de la bobine 6, et un guide extérieur de bobine 9 fixé sur le support 3 alentour de la bobine 6 et muni de galets de guidage 10, l'ensemble permettant de monter la bobine 6 sur le plateau 5 pour son déroulement autour d'un axe vertical et de maintenir la bobine compacte sans déroulement prématuré, aussi bien intérieur qu'extérieur.

Le support 3 de l'unité 1 porte également un socle circulaire 11, orientable par pivotement autour d'un axe vertical et portant un bâti mobile 12 qui comporte deux rouleaux 13 d'entraînement de la tôle, ces rouleaux étant mûs par un moto-réducteur 14 porté par le support 12. En outre, ce support comporte un rouleau croqueur 15 qui est fou et permet de casser le nerf de la tôle 16, titrée par les rouleaux entraîneurs 13. L'ensemble du support 12 et des rouleaux entraîneurs 13 et croqueur 15 peut être orienté en direction convenable par rotation du socle circulaire 11 et bloqué dans la position désirée par tout moyen approipé.

Le support 3 comporte également une paire de rouleaux polisseurs 17, entraînés par un moto variateur 18 et pouvant être rapprochés pour presser et polir les deux faces de la tôle 16 au fur et à mesure de son déroulement.

La tôle 16 ainsi déroulée, croquée, entraînée et polie passe à la sortie de l'unité d'alimentation 1 dans un dispositif de coupe 19 qui comporte un cadre support 20 orientable autour d'un axe vertical par rapport au support de base 3 de l'unité d'alimentation, ce cadre-support 20 comportant lui-même deux guides de coupe 21 et 22 à serrage pneumatique situé de part et d'autre de la tôle 16, le guide extérieur 22 comportant deux rails de guidage sur lesquels peut se déplacer verticalement une tête de coupe 23, qui peut par exemple être disque abrasif tournant à grande vitesse, ou encore une torche de coupage par procédé thermique, ou tout autre dispositif de coupe selon la nature du métal à couper.

Le manège 2 se compose d'un bâti en étoile 24 monté sur vérins de réglage 25 permettant sa mise à l'horizontale et au niveau du support 3. Sur ce bâti est disposé une couronne tournante 26 qui tourne sur des galets supports 27 tourillonnant sur chacune des branches de l'étoile 24 et dont certains au moins sont entraînés en rotation par un moto-réducteur variateur 28 placé par exemple au centre de l'étoile avec des arbres de transmission radiaux 27a. Le plateau tournant en forme de couronne 26 comporte un certain nombre de cales intérieures 29 réglables radialement pour être amené au rayon exact correspondant au rayon intérieur de la virole en cours d'exécution.

Le moto-réducteur variateur 28 est réglé de telle manière que la vitesse périphérique, au rayon défini par les cales 29, corresponde exactement à la vitesse d'avance de la bande 16 sous l'effet des rouleaux entraîneurs 13.

La bande sortant de l'unité d'alimentation 1 est ainsi reçue par son extrémité sur le dessus du plateau 26 et s'enroule tout naturellement en forme de virole sur ce plateau au fur et à mesure de la rotation de celui-ci.

Un dispositif de mesure approprié, non représenté, permet de mesurer exactement la longueur de tôle 16 déroulée depuis la dernière coupe, et lorsque cette longueur correspond exactement au développement de la virole en cours d'exécution, les rouleaux entraîneurs 13 sont arrêtés et le dispositif de coupe 19 mis en action pour séparer de la bande 16 la partie 30 destinée à constituer la virole. Les deux bords de celle-ci sont alors accostés entre eux et assemblés provisoirement par des points de soudure exécutés par exemple à la main.

Au-dessus du manège est prévu un moyen de manutention constitué par exemple par une simple grue, dont seul le crochet 31 a été représenté sur la figure, et qui permet de lever l'ensemble du toit 32 et des viroles telles que 30 précédemment exécutées, puis de l'amener en position de manière que son bord inférieur vienne s'appuyer sur le bord supérieur de la virole que l'on vient de former sur le manège, ce qui réalise l'acostage vertical. Pour réaliser l'acostage dans le sens horizontal, celui-ci est facilité par l'identité des diamètres des diverses viroles formées de la même façon, et surtout par la régularité géométrique de leur bord due à la continuité de leur déroulement et du cassage du nerf par le rouleau croqueur 15. En outre, cet accostage est assuré par une paire de galets 33 portés chacun par un vérin presseur 34 lui-même porté par un chariot 35 mobile sur un montant vertical 36 rigidement encastré à sa base sur le bâti 24, le déplacement vertical du chariot 35 étant assuré par une vis 37 entraînée par un groupe variateur 38. Les deux vis 37 situées l'une à l'extérieur et l'autre à l'intérieur de la couronne 26 sont de préférence entraînées l'une par l'autre à l'aide d'un seul groupe moteur 38.

Naturellement l'ensemble est manoeuvré de manière à amener les galets d'accostage 33 à cheval sur la jonction entre les deux viroles successives.

La rotation du manège permet d'amener les deux bords de virole ainsi accostés devant une tête de soudage 39 de type approprié, TIG, MIG, ou MAG, laquelle est montée sur un chariot 40 mobile verticalement sur un autre montant vertical 41 encastré à sa base sur le bâti 24. Le déplacement du chariot est également assuré par une vis 42 entraînée par un moto variateur 43. Une potence 44 permet de supporter le coffret de commande et un dévidoir 45 de métal d'apport.

Les poteaux 36 et 41 peuvent éventuellement être accouplés en un seul, avec les vis 37 et 42 de chaque côté par exemple.

Le chariot 40 est également manoeuvré par son moteur pour être amené à la position de soudage correspondant à la jonction entre les deux viroles successives. On peut également disposer à l'intérieur de la virole une injection 46 de gaz neutre pour protéger l'envers de la soudure, ou un jet d'air chaud 47 pour réchauffer et sécher les tôles en cas de soudage sur chantier.

Après soudure complète, au besoin en plusieurs passes, le cordon de soudure est écrasé entre les galets 33 en effectuant un tour de manège supplémentaire tout en donnant aux vérins 34 une forte pression. Ceci est particulièrement important dans les industries alimentaires où les risques de prolifération bactérienne nécessitent des surfaces intérieures lisses et continues pour assurer des conditions de nettoyage rigoureuses.

La soudure verticale de fermeture de la virole, qui était simplement pointée jusqu'alors, peut être exécutée de la même manière, le manège étant arrêté en position convenable, et la tête de soudage 39 étant entraînée par son moteur 43 à la vitesse voulue. De la même façon la soudure verticale ainsi exécutée peut être arasée en prévoyant pour cela de basculer les galets 33 pour amener leur axe à être horizontal, comme représenté en trait interrompu sur la figure, la soudure étant naturellement amenée en position convenable par rotation du manège, puis écrasée par manoeuvre verticale des galets 33 sous l'effet du moto variateur 38.

Naturellement dans le procédé complet, on commence en première opération, à assembler le toit 32, puis par former la première virole, et à exécuter la soudure horizontale entre le toit et la première virole de la même manière que celle qui vient d'être décrite. Ensuite on forme et on assemble successivement les diverses viroles à la suite, chaque nouvelle virole venant se placer en dessous de l'ouvrage, et l'on termine la dernière virole, le fond étant naturellement soudé ultérieurement par un autre procédé.

En définitive on voit donc que le procédé selon l'invention permet de n'effectuer que très peu de manutentions et d'opérations manuelles, et de réaliser des appareils d'une parfaite géométrie, d'un état de surface impeccable, avec des soudures arasées, en même temps que l'installation se borne à amener sur le chantier les deux unités 1 et 2 et les bobines de métal.

## Revendications

1. Procédé de fabrication d'une enveloppe métallique cylindrique de grandes dimensions par soudage de viroles successives, selon lequel:

— on déroule en continu et à une vitesse régulière du métal en bande à partir d'une bobine (6), et au fur et à mesure de l'avancement de la bande (16) on effectue en continu la traction (13), le formage et la mesure de longueur de la bande;

— en même temps on dépose en continu la bande ainsi déroulée (30) sur un manège (2) comportant un plateau tournant (26) dont la vitesse de rotation correspond à la vitesse d'avancement de la bande au rayon de la virole en cours d'exécution;

— puis une fois atteinte la longueur correspondant au développement de la virole, on arrête le déroulement de la bande, on coupe la virole (30) du reste de la bande (16) et on finit son enroulement sur le manège;

— on amène ensuite l'ouvrage en cours en dessus de cette virole (30) et on effectue l'accostage et la soudure horizontale du bord supérieur de cette virole avec le bord inférieur du reste de l'ouvrage; et

— on effectue la soudure verticale de fermeture de chaque virole, caractérisé par le fait que l'accostage et la soudure horizontale des bords des viroles sont effectués automatiquement par rotation continue du manège et passage entre des galets fixes (33) et devant une tête de soudage fixe (39), tandis que la soudure verticale de fermeture de chaque virole est effectuée automatiquement par arrêt du manège et déplacement vertical de la tête de soudage (39).

2. Procédé selon la revendication 1, caractérisé par le fait que l'on effectue l'arasage intérieur et extérieur des soudures horizontales et verticales par écrasement entre les galets (33), en position fixe avec manège tournant pour les soudures horizontales, et en déplacement vertical avec manège arrêté pour les soudures verticales.

3. Installation pour la mise en oeuvre du procédé selon la revendication 1 et comportant:

— un dispositif dérouleur de bobine à axe vertical avec plateau support (5);

— un dispositif de formage et de traitement de tôle (11 à 15, 17 à 23);

— un manège (2) comportant un plateau tournant (26) en forme de couronne monté sur des galets (27) dont certains sont entraînés en rotation à une vitesse réglable;

— un moyen de lavage (31) de l'ouvrage en cours, et des moyens de soudure, caractérisé par le fait qu'elle comporte en outre:

— une paire de montants verticaux (36) rigides solidement encastrés sur la base (24) du manège et portant chacun un chariot (35) déplaçable verticalement au moyen d'une vis (37) et portant lui-même un vérin (34) susceptible de presser un galet (33) contre la virole, les deux montants et les organes qu'il comporte étant disposés un à l'extérieur et l'autre à l'intérieur par rapport au plateau tournant (26) en forme de couronne, un moto-réducteur à variateur (38) assurant l'entraînement synchronisé des deux vis (37);

— un deuxième montant (41) également solidaire de la base (24) du manège et comportant également un chariot (40) mobile verticalement sous l'action d'une vis (42) et d'un moto-réducteur à variateur (43), ce chariot (40) portant une tête de soudage (39) d'un modèle approprié avec ses auxiliaires d'alimentation (45).

4. Installation selon la revendication 3, caractérisée par le fait que le dispositif dérouleur de bobine comporte des dispositifs de retenue intérieur (8) et extérieur (9) empêchant tout déroulement intempestif.

5. Installation selon une des revendications 3 et 4, caractérisée par le fait que le dispositif de formage et de traitement de tôle comprend:

— un rouleau croqueur fou (15) suivi par une paire de rouleaux entraîneurs (13) mus par un moto-réducteur (14), l'ensemble de ces rouleaux étant monté sur un support (11, 12) réglable en orientation; et

— une paire de rouleaux polisseurs (17), puis un dispositif (19) de pincement et de coupe verticale de la bande, ce dernier dispositif étant de préférence orientable par articulation sur un support commun (3) à l'ensemble des organes précédents.

6. Installation selon une des revendications 3 à 5, caractérisée par le fait que le plateau (26) comporte un certain nombre de cales (29) réglables radialement pour que leurs bords extérieurs soient amenés à une distance du centre correspondant au rayon de la virole.

7. Installation selon la revendication 3, plus particulièrement destinée à la mise en oeuvre du procédé selon la revendication 2, caractérisée par le fait que la force des vérins (34) de pressage des galets (33) et la résistance à la flexion des deux montants (36) correspondants sont déterminées de manière à pouvoir exercer entre les galets (33) une pression suffisante pour assurer l'écrasement des cordons de soudure, les supports des galets (33) comportant en outre un dispositif de basculement permettant de positionner les axes des galets à volonté à la verticale et à l'horizontale.

8. Installation selon la revendication précédente, caractérisée par le fait qu'il comporte en outre, près du poste de soudage et du côté intérieur à la virole, un support approprié comportant une injection de gaz inerte (46) ou une torche (47) de séchage des tôles.

**Claims**

1. Process for producing a large-size cylindrical metal casing by welding successive hoops, according to which:

the metal is unwound in strip form from a reel (6) continuously and at a uniform speed, and the strip is continuously drawn off (13), shaped and measured for length as the strip (16) advances;

at the same time, the strip unwound in this way (30) is placed continuously onto a carousel (2) having a turntable (26), the rotational speed of which corresponds to the speed of advance of the strip at the radius of the hoop being produced;

then, once the length corresponding to the extension of the hoop has been reached, the unwinding of the strip is stopped, the hoop (30) is cut off from the rest of the strip (16) and the winding of the hoop (30) onto the carousel is completed;

subsequently, the structure being built is brought above this hoop (30), and the upper edge of this hoop is moved up to and welded horizontally to the lower edge of the rest of the structure; and

a vertical weld closing each hoops is made, characterized in that the edges of the hoops are moved up to one another and horizontally welded automatically as a result of the continuous rotation of the carousel and passage between fixed rollers (33) and in front of a fixed welding head (39), whilst the vertical weld closing each hoop is made automatically by stopping the carousel and shifting the welding head (39) vertically.

2. Process according to Claim 1, characterized in that the inner and outer levelling of the horizontal and vertical welds is carried out as a result of compression between the rollers (33), in a fixed position with the carousel rotating for the horizontal welds and by a vertical shift with the carousel stopped for the vertical welds.

3. Apparatus for carrying out the process according to Claim 1, comprising:

a reel-unwinding device of vertical axis with a support plate (5);

a device for shaping and processing sheet metal (11 to 15, and 17 to 23);

a carousel (2) having a turntable (26) in the form of a ring, mounted on rollers (27), some of which are driven in rotation at a variable speed;

a means (31) of lifting the structure being built, and welding means, characterized in that it also includes:

a pair of rigid vertical uprights (36) firmly embedded on the base (24) of the carousel and each carrying a carriage (35) vertically displaceable by means of a screw (37) and itself carrying a jack (34) capable of pressing a roller (33) against the hoop, the two uprights and the members which each of them possesses being arranged one on the outside and the other on the inside in relation to the ring-shaped turntable (26), a variable-speed reduction unit (38) ensuring that the two screws (37) are driven in synchronism;

a second upright (41) likewise fixed to the base (24) of the carousel and likewise having a carriage (40) movable vertically under the action of a screw (42) and of a variable-speed reduction unit (43), this carriage (40) carrying a welding head (39) of an appropriate type together with its supply accessories (45).

4. Apparatus according to Claim 3, characterized in that the reel-unwinding device has inner and outer retaining devices (8, 9) preventing any inopportune unwinding.

5. Apparatus according to one of Claims 3 and 4, characterized in that the device for shaping and processing sheet metal comprises:

an idle nip roller (15) followed by a pair of drive rollers (13) actuated by a reduction unit (14), all of these rollers being mounted on a support (11, 12) of adjustable orientation; and

a pair of polishing rollers (17) and then a device (19) for gripping the strip and cutting it vertically, the latter device preferably being orientable by being articulated on a support (3) common to all the preceding members.

6. Apparatus according to one of Claims 3 to 5, characterized in that the turntable (26) has a certain number of wedges (29) which are radially adjustable so that their outer edges are brought to a distance from the centre which corresponds to the radius of the hoop.

7. Apparatus according to Claim 3, intended more particularly for carrying out the process according to Claim 2, characterized in that the force of the jacks (34) for pressing the rollers (33) and the bending resistance of the two corresponding uprights (36) are determined in such a way that it is possible to exert between the rollers (33) a pressure which is sufficient to ensure the compression of the welding beads, the supports of the rollers (33) also having a tilting device making it possible to position the axes of the rollers vertically or horizontally as desired.

8. Apparatus according to the preceding claim, characterized in that it also possesses, near the welding station and on the inside of the hoop, a suitable support comprising an inert-gas injection means (46) or a sheet-metal drying torch (47).

**Patentansprüche**

1. Verfahren zur Herstellung eines zylindrischen Metallgehäuses grossen Ausmasses durch Verschweissen von aufeinanderfolgenden Ringsegmenten, bei welchem:

— Bandmetall von einer Spule (6) kontinuierlich und mit grosser Geschwindigkeit abgerollt wird und in Abhängigkeit vom Vorschub des Bandes (16) Ziehen, Formen und Messen der Länge des Bandes kontinuierlich durchgeführt werden;

— gleichzeitig das so abgerollte Band (30) auf einem Karussell (2) mit einem Drehteller (26), dessen Drehgeschwindigkeit der Vorschubgeschwindigkeit des Bandes im Bereich des gerade bearbeiteten Ringsegmentes entspricht, kontinuierlich abgelegt wird;

— dann nach Erreichen der der Abwicklung des Ringsegmentes entsprechenden Länge das Abrollen des Bandes unterbrochen, das Segment vom Rest des Bandes (16) abgeschnitten und sein Aufrollen auf das Karussell abgebrochen wird;

— hierauf das zu bearbeitende Werkstück auf der oberen Seite dieses Segmentes (30) angesetzt wird und das Anlegen und die waagrechte Verschweissung des oberen Randes dieses Segmentes mit dem unteren Rand des restlichen Werkstückes aufgeführt wird; und

— die senkrechte Verschlussschweissung jedes Segmentes ausgeführt wird, dadurch gekennzeichnet, dass das Anlegen und das waagrechte Verschweissen der Ränder der Segmente automatisch durch kontinuierliche Drehung des Karussells und Durchführung zwischen ortsfesten Rollen (33) und vor einem ortsfesten Schweisskopf (39) ausgeführt werden, während die senkrechte Verschlussschweissung jedes Segmentes automatisch durch Anhalten des Karussells und senkrechte Verschieben des Schweisskopfs (39) durchgeführt wird.

2. Verfahren nach Anspruch 1, dadurch gekennzeichnet, dass das Abgleichen innen und aussen der waagrechten und senkrechten Schweissnähte durch Quetschen zwischen den Rollen (33) in ortsfester Stellung bei sich drehendem Karussell für die waagrechten Nähte und mit senkrechtem Verschieben bei angehaltenem Karussell für die senkrechten Schweissnähte durchgeführt wird.

3. Einrichtung zur Ausführung des Verfahrens nach Anspruch 1, welche folgendes umfasst:

— eine Abspulvorrichtung mit vertikaler Achse mit Trageteller (5);

— eine Vorrichtung zur Formung und Behandlung von Blech (11 bis 15, 17 bis 23);

— ein Karussell (2) mit einem auf Rollen (27), von denen bestimmte mit regelbarer Geschwindigkeit zu einer Drehbewegung angetrieben sind, angebrachten ringförmigen Drehteller (26);

— eine Hebevorrichtung (31) für das zu bearbeitende Werkstück, und eine Schweissvorrichtung, dadurch gekennzeichnet, dass sie ausserdem folgendes enthält:

— ein Paar vertikaler starrer Stützen (36), welche fest auf der Basis (24) des Karussells eingespannt sind und von denen jede einen mittels einer Schraube (37) vertikal verschiebbaren und selbst einen zum Anpressen einer Rolle (33) an das Segment geeigneten Zylinder (34) aufweisenden Schlitten (35) trägt, wobei von den beiden Stützen und den Elementen, welche sie tragen, eine aussen und eine innen bezüglich des ringförmigen Drehtellers angeordnet sind und ein Wechselgetriebemotor (38) des synchronisierten Antrieb der beiden Schrauben (37) sicherstellt;

— eine ebenfalls mit der Basis (24) des Karussells verbundene zweite Stütze (41), welche ebenfalls einen mittels einer Schraube (42) und einem Wechselgetriebemotor (43) vertikal beweglichen Schlitten (40) aufweist, wobei dieser Schlitten (40) einen Schweisskopf (39) geeigneter Form mit dessen Speisungshilfsvorrichtung (45) trägt.

4. Einrichtung nach Anspruch 3, dadurch gekennzeichnet, dass die Abspulvorrichtung eine innere (8) und eine äussere (9) Haltevorrichtung aufweist, welche jedes ungewollte Abrollen verhindert.

5. Einrichtung nach einem der Ansprüche 3 und 4, dadurch gekennzeichnet, dass die Vorrichtung zur Formung und Behandlung von Blech folgendes umfasst:

— eine freie drehbare Glättrolle (15), gefolgt von einem Paar von einem Getriebemotor (14) angetriebener Mitnehmerwalzen (13), wobei die Gesamtheit dieser Rollen auf einem Träger (11, 12) mit regelbarer Ausrichtung montiert ist; und

— ein Paar Polierwalzen (17), hierauf eine Vorrichtung (19) zum Einspannen und vertikalen Schneiden des Bandes, wobei diese letztere Vorrichtung vorzugsweise auf einem mit der Gesamtheit der vorhergehenden Elemente gemeinsamen Träger (3) gelenkig ausrichtbar ist.

6. Einrichtung nach einem der Ansprüche 3 bis 5, dadurch gekennzeichnet, dass der Teller (26) eine bestimmte Anzahl Unterlegkeile (29) umfasst, welche radial so ausgerichtet werden können, dass ihre äusseren Ränder auf einen dem Radius des Ringsegmentes entsprechenden Abstand vom Mittelpunkt eingestellt sind.

7. Einrichtung nach Anspruch 3, insbesondere zur Durchführung des Verfahrens nach Anspruch 2, dadurch gekennzeichnet, dass die Kraft der Zylinder (34) zum Anpressen der Rollen (33) und der Widerstand gegen das Biegen der beiden entsprechenden Stützen (36) so bestimmt werden, dass sie einen ausreichenden Druck zwischen den Rollen (33) ausüben, um das Quetschen der Schweissnähte sicherzustellen, wobei die Träger der Rollen (33) ausserdem eine Kippvorrichtung aufweisen, welche die beliebige Ausrichtung der Rollenachsen in die Senkrechte und in die Waagrechte ermöglicht.

8. Einrichtung nach dem vorhergehenden Anspruch, dadurch gekennzeichnet, dass sie ausserdem nahe der Schweissstelle auf der Innenseite des Ringsegments ein geeignetes Gestell mit einer Inertgaszuführung (46) oder einer Blechtrockenfackel (47) aufweist.